# EUROPÄISCHE PATENTANMELDUNG

(11) **EP 4 431 517 A1**
(43) Veröffentlichungstag der Anmeldung: **18.09.2024**
(21) Anmeldenummer: 23162070.9
(22) Anmeldetag: 15.03.2023
(51) Int. Cl.: C07F 9/12, C08K 5/523, C07F 9/09, C10M 169/00, C10M 137/04, C08K 5/00

(54) **PHOSPHORSÄUREESTER-ZUSAMMENSETZUNGEN FÜR FLAMMWIDRIGES WEICH-PVC MIT NIEDRIGER FLÜCHTIGKEIT**

(71) Anmelder: LANXESS Deutschland GmbH, 50569 Köln (DE)
(72) Erfinder: Omann, Lukas, 50931 Köln (DE); Hansel, Jan-Gerd, 51469 Bergisch Gladbach (DE)

(57) **Zusammenfassung**

Mischungen enthaltend:
a) 0 bis 30 Gew.-% (RO)₃P=O,
b) 10 bis 90 Gew.-% (RO)₂(PhO)P=O,
c) 10 bis 90 Gew.-% (RO)(PhO)₂P=O und
d) 0 bis 0,5 Gew.-% (PhO)₃P=O
jeweils bezogen auf das Gesamtgewicht der Komponenten a) bis d), worin R dem Rest 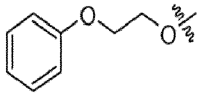 und Ph dem Phenylrest entspricht, zeigen eine einzigartige Kombination aus niederer Flüchtigkeit, hoher Flammwidrigkeit und niederer Schmelz- bzw. Erweichungstemperatur. Daher sind besonders für eine Verwendung als Flammschutzmittel in PVC-Compounds, als Hydraulikflüssigkeit, als Schmierstoffadditiv oder als Additiv für Lacke, Klebstoffe, Dichtmassen oder Beschichtungen geeignet.

## Beschreibung

Phosphorsäureester können in verschiedenen technischen Anwendungen eingesetzt werden, z.B. als Schmierstoffe (vgl. US 10,414,964 B2), Hydraulikflüssigkeiten (vgl. US 6,703,355 B2), Weichmacher (vgl. DE 1 768 076) oder als Flammschutzmittel (vgl. US 8,129,457 B2).

Die Flammschutzwirkung von Phosphorsäureestern wurde bereits in verschiedenen Kunststoffen, z.B. in PVC (vgl. GB 2 302 543 A), in Polyolefinen (vgl. US 11,008,440 B2), in Celluloseestern (US 9,000,148 B2), in Polyurethanen (vgl. US 8,129,457 B2) oder in Stryrolpolymeren (vgl. US 8,026,303 B2) gezeigt.

Eine besondere Bedeutung haben Phosphorsäureester bei der Verarbeitung von Weich-PVC, wo sie sowohl als Flammschutzmittel als auch als Weichmacher wirken. Dort werden häufig gemischte Phosphorsäurealkyl-arylester eingesetzt. Beispielhaft sei der aus EP 0 000 240 A1 bekannte Phosphorsäure-2-ethylhexyl-diphenylester genannt, welcher als Disflamoll^{®} DPO vermarktet wird.

Nachteilig an gemischten Phosphorsäurealkyl-arylestern ist jedoch ihre im Vergleich zu Phosphorsäuretriarylestern geringere Flammschutzwirkung und höhere Flüchtigkeit. Letztere verursacht im Laufe der Lebenszeit eines Weich-PVC-Artikels einen Weichmacherverlust und damit eine unerwünschte allmähliche Versprödung.

Weiterhin enthalten die Phosphorsäurealkyl-arylester aus dem Stand der Technik, wie z. B. Disflamoll^{®} DPO, 1 bis 5 Gew.-% Triphenylphosphat. Dessen Gefahrstoffeigenschaften haben dazu geführt, dass immer niedrigere Gehalte dieser Substanz in verbrauchernahen Anwendungen gefordert werden.

Es hat daher nicht an Versuchen gefehlt, verbesserte Phosphorsäurealkyl-arylester zu finden. Beispielsweise sind Phosphorsäureester auf Basis von 2-Phenoxyethanol und Phenol aus R. T. Gottesman et al., Fire Retardants, Proc. Int. Symp. Flammability Fire Retardants 1976, 225-237 bekannt. Die Produkte werden als Phosphorsäureester-Zusammensetzungen beschrieben, ohne dass jedoch ihre Bestandteile oder deren Mengenverhältnisse offenbart sind. Über einen Gehalt an Triphenylphosphat oder die Flüchtigkeit der Produkte wird ebenfalls nichts berichtet.

Bei Nacharbeitung der Darstellung von Phosphorsäureestern auf Basis von 2-Phenoxyethanol und Phenol gemäß . Gottesman et al. zeigte sich, dass ein hoher Gehalt an Triphenylphosphat anfällt und die Flüchtigkeit verbesserungsbedürftig ist.

Aufgabe der vorliegenden Erfindung war es daher, eine Mischung bereitzustellen, welche sich durch eine niedrige Flüchtigkeit und einen niedrigen Gehalt an Triphenylphosphat auszeichnet und insbesondere in Zusammensetzungen mit PVC-Formmassen eine hohe Flammschutzwirkung erzielt. Bevorzugt sollte diese Mischung einen niederen Schmelzpunkt aufweisen und im Idealfall bei Raumtemperatur in flüssiger Form vorliegen, wodurch die Verarbeitung erleichtert wird. Bevorzugt sollte diese Mischung außerdem durch ein wenig aufwändiges Verfahren und mit einem niedrigen Gehalt an Triphenylphosphat erhältlich sein. Zusätzlich sollte eine weichmachende Wirkung in PVC erzielt werden.

Die Aufgabe wird gelöst durch Mischungen enthaltend:
a) 0 bis 30 Gew.-% (RO)₃P=O,
b) 10 bis 90 Gew.-% (RO)₂(PhO)P=O,
c) 10 bis 90 Gew.-% (RO)(PhO)₂P=O und
d) 0 bis 0,5 Gew.-% (PhO)₃P=O

jeweils bezogen auf das Gesamtgewicht der Komponenten a) bis d), vorzugsweise jeweils bezogen auf das Gesamtgewicht der Mischung,
worin R dem Rest 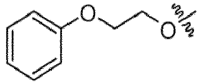
und Ph dem Phenylrest entspricht.

In einer bevorzugten Ausführungsform der Erfindung enthält die Mischung
a) 1 bis 30 Gew.-% (RO)₃P=O,
b) 20 bis 84 Gew.-% (RO)₂(PhO)P=O,
c) 15 bis 79 Gew.-% (RO)(PhO)₂P=O und
d) 0 bis 0,5 Gew.-% (PhO)₃P=O
jeweils bezogen auf das Gesamtgewicht der Komponenten a) bis d), vorzugsweise jeweils bezogen auf das Gesamtgewicht der Mischung.

In einer weiter bevorzugten Ausführungsform der Erfindung enthält die Mischung
a) 5 bis 30 Gew.-% (RO)₃P=O,
b) 20 bis 80 Gew.-% (RO)₂(PhO)P=O,
c) 15 bis 75 Gew.-% (RO)(PhO)₂P=O und
d) 0 bis 0,2 Gew.-% (PhO)₃P=O
jeweils bezogen auf das Gesamtgewicht der Komponenten a) bis d), vorzugsweise jeweils bezogen auf das Gesamtgewicht der Mischung.

In einer weiter bevorzugten Ausführungsform der Erfindung enthält die Mischung
a) 10 bis 25 Gew.-% (RO)₃P=O,
b) 50 bis 75 Gew.-% (RO)₂(PhO)P=O,
c) 15 bis 40 Gew.-% (RO)(PhO)₂P=O und
d) 0 bis 0,2 Gew.-% (PhO)₃P=O
jeweils bezogen auf das Gesamtgewicht der Komponenten a) bis d), vorzugsweise jeweils bezogen auf das Gesamtgewicht der Mischung.

In einer besonders bevorzugten Ausführungsform der Erfindung, enthält die erfindungsgemäße Phosphorsäureester-Zusammensetzung weniger als 0,2 Gew% Triphenylphosphat, besonders bevorzugt weniger als 0,1 Gew% Triphenylphosphat.

Bevorzugt liegen die erfindungsgemäßen Mischungen bei 23°C und 1013 mbar als Feststoffe oder als Flüssigkeit vor, besonders bevorzugt als Flüssigkeit mit einer dynamischen Viskosität von 20 bis 5000 mPa s, meist bevorzugt von 50 bis 2000 mPa·s (jeweils bei 23°C).

Bevorzugt weisen die erfindungsgemäßen Mischungen einen Schmelz- oder Erweichungspunkt von unter 70°C, bevorzugt von unter 55°C besonders bevorzugt von unter 40°C auf.

Bevorzugt weisen die erfindungsgemäßen Mischungen eine Säurezahl kleiner 5 mg KOH/g, bevorzugt kleiner 1 mg KOH/g, besonders bevorzugt kleiner 0,3 mg KOH/g, ganz bevorzugt kleiner 0,1 mg KOH/g auf.

Überraschenderweise wurde gefunden, dass PVC-Formmassen enthaltend die erfindungsgemäßen Mischungen eine hohe Flammwidrigkeit aufweisen. Die erfindungsgemäßen Mischungen können unerwartet einfach in einem neuartigen Verfahren so hergestellt werden, dass die Mischung kein oder nur sehr wenig Triphenylphosphat enthält.

Ein weiterer Gegenstand der Erfindung ist ein Verfahren zur Herstellung der erfindungsgemäßen Mischungen, umfassend die Schritte:
(a) Bereitstellen einer Mischung enthaltend Phosphoroxychlorid und Phenoxyethanol,
(b) Umsetzung zumindest eines Teils der Mischung aus a) bei Temperaturen zwischen 0°C bis 50°C unter Abtrennung von Chlorwasserstoff,
(c) Bereitstellen einer Mischung enthaltend Phenol und eine Base sowie optional ein Lösungsmittel,
(d) Vereinigung der aus b) erhaltenen Mischung und der Mischung aus c) und Umsetzung bei Temperaturen zwischen -20°C und 50°C unter Bildung eines Chloridsalzes.

In einer alternativen Ausführungsform wird zumindest ein Teil des Phosphoroxychlorids erst in Schritt b) zudosiert, Es ist auch möglich, dass zumindest ein Teil des Phenoxyethanols erst in Schritt b) zudosiert wird.

Die Umsetzung gemäß Schritt b) erfolgt üblicherweise im Bereich von 0°C bis 50°C, vorzugsweise im Bereich von 10°C bis 40°C, besonders bevorzugt im Bereich von 20°C bis 30°C.

Optional kann zwischen dem Schritt b) und dem Schritt c) eine destillative Abtrennung von (nicht umgesetzten) Edukten des Schritts a) und/oder gebildeten Nebenprodukten (wie z.B. Chlorwasserstoff) erfolgen. Die Destillation kann als Batch-Verfahren oder als kontinuierlicher Prozess durchgeführt werden. Die Temperatur der Destillation liegt vorzugsweise im Bereich von 0°C bis 50°C. Besonders bevorzugt wird die Destillation bei der Reaktionstemperatur von Schritt b) oder einer Temperatur zwischen 0°C und der Reaktionstemperatur von Schritt b) durchgeführt. Die Destillation erfolgt in einem Druckbereich von 0,01 mbar und 1013 mbar, bevorzugt im Bereich von 0,01 mbar und 100 mbar, ganz besonders bevorzugt im Bereich von 0,01 mbar und 50 mbar.

Als Base für Schritt c) können alle dem Fachmann bekannten, handelsüblichen Basen eingesetzt werden. Dazu zählen Alkali-Hydroxide wie z.B. NaOH, KOH oder LiOH, oder Amine wie z.B. Triethylamin, Imidazol, 1-Methylimidazol, Diisopropylethylamin, Dibutylamin, Morpholin, usw., einschließlich Ammoniak bzw. ammoniakalische Lösungen.

In einer bevorzugten Ausführungsform wird zur Umsetzung in Schritt c) ein Lösungsmittel eingesetzt. Als Lösungsmittel können alle dem Fachmann bekannte, handelsübliche Lösungsmittel eingesetzt werden. Dazu zählt beispielsweise Wasser, aromatische Kohlenwasserstoffe wie z.B. Toluol, Xylol, aliphatische Kohlenwasserstoffe, wie z.B. Pentan, Hexan, Cyclohexan, Heptan oder längerkettige Kohlenwasserstoffe, oder chlorierte Kohlenwasserstoffe, wie z.B. Dichlormethan, Dichlorethan oder Chlorbenzol.

In einer alternativen Ausführungsform wird zumindest ein Teil der in Schritt c) bereitgestellten Mischung zu der in Schritt b) erhaltenen Mischung dosiert. Es ist auch möglich, dass zumindest ein Teil der Base oder ein Teil des Phenols erst in Schritt d) zudosiert wird.

Die Umsetzung gemäß Schritt d) erfolgt üblicherweise im Bereich von -20°C bis 50°C, vorzugsweise im Bereich von 0°C bis 30°C.

Nach dem Schritt d) kann eine Abtrennung von Edukten und/oder von Nebenprodukten der Schritte b) und/oder d) durch Filtration, Extraktion, Wäsche und/oder Destillation erfolgen. In einer bevorzugten Ausführungsform der Erfindung werden zunächst die als Koppelprodukt gebildeten Chloridsalze abgetrennt. Wurde Wasser als optionales Lösungsmittel in Schritt c) eingesetzt, so kann die Abtrennung durch einfache Trennung der wässrigen und der organischen Phase erfolgen. Wurde Schritt c) wasserfrei durchgeführt, so kann die Abtrennung der Chloridsalze durch eine Filtration erfolgen.

Zur weiteren Aufreinigung kann das Produkt einer Wäsche unterzogen werden. Als Waschlösung eignet sich beispielsweise Natronlauge oder Kalilauge oder Wasser. Die Wäsche erfolgt üblicherweise bei Temperaturen zwischen 20°C und 50°C.

Das optional in Schritt c) eingesetzte Lösungsmittel kann durch Destillation entfernt werden. Die Bedingungen der Destillation können von einem Fachmann leicht ermittelt werden.

Die erfindungsgemäßen Mischungen können je nach Anwendung noch weitere Hilfsstoffe enthalten. Als Hilfsstoffe kommen zum Beispiel Weichmacher, weichmachende Polymere, polymere Modifikatoren, Stabilisatoren (z.B. Thermostabilisatoren, Lichtstabilisatoren, Antioxidantien), Co-Stabilisatoren (z.B. Säurefänger, Radikalfänger), innere und äußere Gleitmittel, Viskositätsregler, Füllstoffe, Farbpigmente, Farbstoffe, Flammschutzmittel, Flammschutzmittel-Synergisten, Treibmittel sowie weitere Funktionsadditive wie z.B. Antistatika, Nukleierungsmittel, UV-Schutzmittel oder Biozide, in Frage (siehe z.B. R. D. Maier, M. Schiller, Handbuch Kunststoff-Additive, 4. Auflage, München, Carl Hanser Verlag, 2016, S. 513 ff).

Die erfindungsgemäßen Mischungen eignen sich als Flammschutzmittel. Ein weiterer Gegenstand der vorliegenden Erfindung ist somit die Verwendung der erfindungsgemäßen Mischungen als Flammschutzmittel.

Die erfindungsgemäßen Mischungen können als Flammschutzmittel in allen dem Fachmann bekannten Anwendungen für Flammschutzmittel verwendet werden. Bevorzugt werden die erfindungsgemäße Mischungen als Flammschutzmittel für
- synthetische Polymere, wie Polyolefine, Polyvinylchlorid, Polycarbonate, Styrolbasierte (Co-)Polymere, Polyamide, Polyester, Polyurethane, Elastomere wie NBR, CR, SBR, oder EPDM und Duroplaste wie Epoxidharze, ungesättigte Polyesterharze und Phenol-Formaldehydharze,
- Werkstoffe pflanzlichen Ursprungs, wie Holz, Holz-Kunststoff-Komposite, Papier und Pappe, und
- Werkstoffe tierischen Ursprungs, wie Leder, verwendet.

Besonders bevorzugt werden die erfindungsgemäßen Mischungen als Flammschutzmittel für Polyvinylchlorid (PVC) verwendet, beispielsweise in PVC-Formmassen, d.h. in Zusammensetzungen enthaltend PVC welche in Form eines Granulats, eines Pulvers, einer Paste oder eines Plastisols vorliegen.

Gegenstand der Erfindung sind daher auch Zusammensetzungen vorzugsweise in Form eines Granulats, eines Pulvers, einer Paste oder eines Plastisols, enthaltend eine erfindungsgemäße Mischung und Polyvinylchlorid (PVC). Bevorzugt handelt es sich bei diesen erfindungsgemäßen PVC-Formmassen um Weich-PVC. Die erfindungsgemäßen PVC-Formmassen können hergestellt werden, indem man PVC mit den erfindungsgemäßen Mischungen und gegebenenfalls weiterer Hilfsstoffe, z.B. Stabilisatoren in an sich bekannter Weise (siehe z.B. G. Becker, D. Braun, Kunststoff-Handbuch, Polyvinylchlorid, Bd.2/2, München, Wien, Carl Hanser Verlag, 1986, S.829 ff) vermischt und compoundiert oder zu einem verarbeitungsbereiten Plastisol oder Organosol dispergiert.

Die erfindungsgemäße PVC-Formmasse enthält vorzugsweise 5 bis 150 Gewichtsteile, besonders bevorzugt 30 bis 70 Gewichtsteile an erfindungsgemäßen Phosphorsäureestern (RO)₃P=O, (RO)₂(PhO)P=O, (RO)(PhO)₂P=O und (PhO)₃P=O gemäß obiger Definition bezogen auf 100 Gewichtsteile PVC. In einer bevorzugten Ausführungsform enthält die erfindungsgemäße PVC-Formmasse 5 bis 150 Gewichtsteile, besonders bevorzugt 30 bis 70 Gewichtsteile an erfindungsgemäßen Phosphorsäureestern bezogen auf 100 Gewichtsteile PVC.

Die erfindungsgemäße PVC-Formmasse findet Anwendung in Beschichtungen, Folien, Kabel, Rohrleitungen, Schläuchen, Dichtungen, Förderbändern, Dachbahnen, Klebebandfolien, Planen, Markisen und Zelten.

Ein weiterer Gegenstand der Erfindung ist die Verwendung der erfindungsgemäßen Mischungen in Hydraulikflüssigkeiten oder zur Herstellung von Hydraulikflüssigkeiten. Bevorzugt werden die erfindungsgemäßen die Mischungen in flammwidrigen Hydraulikflüssigkeiten verwendet.

Ein weiterer Gegenstand der Erfindung ist die Verwendung der erfindungsgemäßen Mischungen als Schmierstoffadditiv. Bevorzugt werden die erfindungsgemäßen Mischungen in flammwidrigen Schmierstoffen verwendet.

Ein weiterer Gegenstand der Erfindung ist die Verwendung der erfindungsgemäßen Mischungen als Additiv für Lacke, Klebstoffe, Dichtmassen und Beschichtungen.

Ein weiterer Gegenstand der Erfindung ist die Verwendung der erfindungsgemäßen Mischungen als Wärmeträger oder in Zubereitungen, die als Wärmeträger verwendet werden. Bevorzugt werden die erfindungsgemäßen Mischungen als Wärmeträger oder in Wärmeträger-Zubereitungen in der Immersionskühlung elektrischer Komponenten verwendet. Die Wärmeträger-Zubereitungen enthalten neben den erfindungsgemäßen Mischungen beispielsweise weitere Trialkylphosphate, Triarylphosphate, Mineralöle, Polyalphaolefine, Ester, Antioxidantien, Metalldeaktivatoren, Fließadditive, Korrosionsinhibitoren, Schauminhibitoren, Demulgatoren und/oder Pourpoint-Erniedriger.

### Beispiele

### Bestimmung der Zusammensetzung der Phosphorsäureester-Zusammensetzungen

Quantitative GC-FID-Analytik wurde mit einem Agilent GC-Gerät des Typs 7890A ausgestattet mit einer Quarzkapillarsäule des Typs CB-Sil 5 CB (Länge: 30 m, Durchmesser: 0,32 mm, Schichtdicke: 3,00 µm) durchgeführt. Als Trägergas wurde Wasserstoff verwendet. Die Injektion der Probe (gelöst in Aceton) erfolgte im Split-Modus (86:1) bei einer Temperatur von 300°C. Folgendes Temperaturprogramm wurde eingestellt: 60°C Starttemperatur, Heizrate 10°C/min bis zu einer Temperatur von 150°C, dann mit einer Heizrate von 25°C/min auf 280°C, Haltezeit: 10 min, dann mit einer Heizrate von 25°C/min auf eine Endtemperatur von 320°C/min, Haltezeit: 10 min. Die Auswertung erfolgte durch Integration des entsprechenden basisliniengetrennten Signals und Umrechnen der Peakflächen in einen Gehalt nach vorheriger Kalibration.

### Bestimmung der Viskosität der Phosphorsäureester-Zusammensetzungen

Die Messung der dynamischen Viskosität von Phosphorsäureestern erfolgte mit einem Anton Paar Scherrheometer des Typs MCR 102 bei der angegebenen Temperatur mit einer Scherrate von 200 s⁻¹ gemäß DIN 53018.

### Bestimmung der Säurezahl der Phosphorsäureester-Zusammensetzungen

Die Säurezahl der Proben wurde in Anlehnung an die DIN EN ISO 2114 (Verfahren B, kolorimetrische Titration mit Phenolphthalein) durchgeführt. Dazu wurde die Probe (10 g) eingewogen, in Aceton (200 mL) und Wasser (50 mL) gelöst und mit 2-3 Tropfen einer Phenolphthalein-Lösung (0,1 Gew% in Ethanol/Wasser (v/v = 4/1)) versetzt. Aus einer Bürette wurde solange Natronlauge (0,1 mol/L) titriert bis der Farbumschlag von farblos zu pink für mindestens 10 Sekunden unter Rühren bestehen blieb. In gleicher Weise aber ohne Probe wurde ein Blindwert gemessen.

### Synthesebeispiele

### Vergleichsbeispiel 1 (V1)

Herstellung in Anlehnung an R. T. Gottesman et al., Fire Retardants, Proc. Int. Symp. Flammability Fire Retardants 1976, 225-237:
In einem Reaktor mit Rührer, Innenthermometer, Stickstoffeinleitung und Rückflusskühler wurde Phosphoroxychlorid (200 Gewichtsteile) vorgelegt. Phenoxyethanol (182 Gewichtsteile) wurde zudosiert. Das so erhaltene Reaktionsprodukt wurde mit einer Lösung aus Natriumhydroxid (129 Gewichtsteile), Phenol (245 Gewichtsteile) und Wasser (600 Gewichtsteile) umgesetzt wobei eine zweiphasige Reaktionsmischung erhalten wurde. Nach Trennen der Phasen wurde die organische Phase mit Natronlauge (0,5 mollL; 500 Gewichtsteile) und anschließend mit Wasser (500 Gewichtsteile) gewaschen. Flüchtige Komponenten wurde durch Destillation bei 50°C und 20 mbar entfernt. Die Produktmischung wurde als Feststoff (Schmelzpunkt: 73°C) isoliert. Die Säurezahl betrug 0,1 mg KOH/g. Die Phosphorsäureester-Zusammensetzung betrug 0,5 Gew% (PhenoxyethylO)₃P=O, 13,7 Gew% (PhenoxyethylO)₂(PhO)P=O, 84,8 Gew% (PhenoxyethylO)(PhO)₂P=O und 1,0 Gew% (PhO)₃P=O ("TPP").

### Erfindungsgemäßes Synthesebeispiel 1 (S1)

In einem Reaktor mit Rührer, Innenthermometer, Stickstoffeinleitung und Rückflusskühler wurde Phosphoroxychlorid (200 Gewichtsteile) vorgelegt. Phenoxyethanol (271 Gewichtsteile) wurde so zudosiert, dass die Innentemperatur zwischen 20°C und 25°C gehalten wurde. Nach beendeter Zugabe wurde der Druck in der Apparatur schrittweise von Atmosphärendruck auf 10 mbar gesenkt und für 1 h unter Endbedingungen gehalten. Die Reaktionsmischung wurde bei 0°C zu einer Mischung aus Dichlormethan (401 Gewichtsteile), Phenol (210 Gewichtsteile) und Triethylamin (251 Gewichtsteile) zudosiert, wobei die Innentemperatur zwischen 0°C und 15°C gehalten wurde. Der Feststoff wurde abfiltriert, und das Filtrat wurde dreimal mit Natronlauge (2%ig, 500 Gewichtsteile) und dreimal mit Wasser (500 Gewichtsteile) gewaschen. Das Lösungsmittel wurde destillativ bei 90°C und 20 mbar entfernt. Die Produktmischung wurde als Feststoff (Schmelzpunkt: 54°C) isoliert. Die Säurezahl betrug < 0,1 mg KOH/g. Die Produktmischung enthielt 5,3 Gew% (PhenoxyethylO)₃P=O, 43,1 Gew% (Phenoxy-ethylO)₂(PhO)P=O, 51,6 Gew% (PhenoxyethylO)(PhO)₂P=O und < 0,1 Gew% (PhO)₃P=O ("TPP").

### Erfindungsgemäßes Synthesebeispiel 2 (S2)

In einem Reaktor mit Rührer, Innenthermometer, Stickstoffeinleitung und Rückflusskühler wurde Phosphoroxychlorid (201 Gewichtsteile) vorgelegt. Phenoxyethanol (361 Gewichtsteile) wurde so zudosiert, dass die Innentemperatur zwischen 20°C und 25°C gehalten wurde. Nach beendeter Zugabe wurde der Druck in der Apparatur schrittweise von Atmosphärendruck auf 10 mbar gesenkt und für 1 h unter Endbedingungen gehalten. Die Reaktionsmischung wurde bei 0°C zu einer Mischung aus Dichlormethan (401 Gewichtsteile), Phenol (186 Gewichtsteile) und Triethylamin (222 Gewichtsteile) zudosiert, wobei die Innentemperatur zwischen 0°C und 15°C gehalten wurde. Der Feststoff wurde abfiltriert, und das Filtrat wurde dreimal mit Natronlauge (2%ig, 500 Gewichtsteile) und dreimal mit Wasser (500 Gewichtsteile) gewaschen. Das Lösungsmittel wurde destillativ bei 90°C und 20 mbar entfernt. Die Produktmischung wurde als viskose Flüssigkeit (330 mPa·s bei 23°C) isoliert. Die Säurezahl betrug < 0,1 mg KOH/g. Die Produktmischung enthielt 20,8 Gew% (PhenoxyethylO)₃P=O, 58,9 Gew% (Phenoxy-ethylO)₂(PhO)P=O, 20,3 Gew% (PhenoxyethylO)(PhO)₂P=O und < 0,1 Gew% (PhO)₃P=O ("TPP").

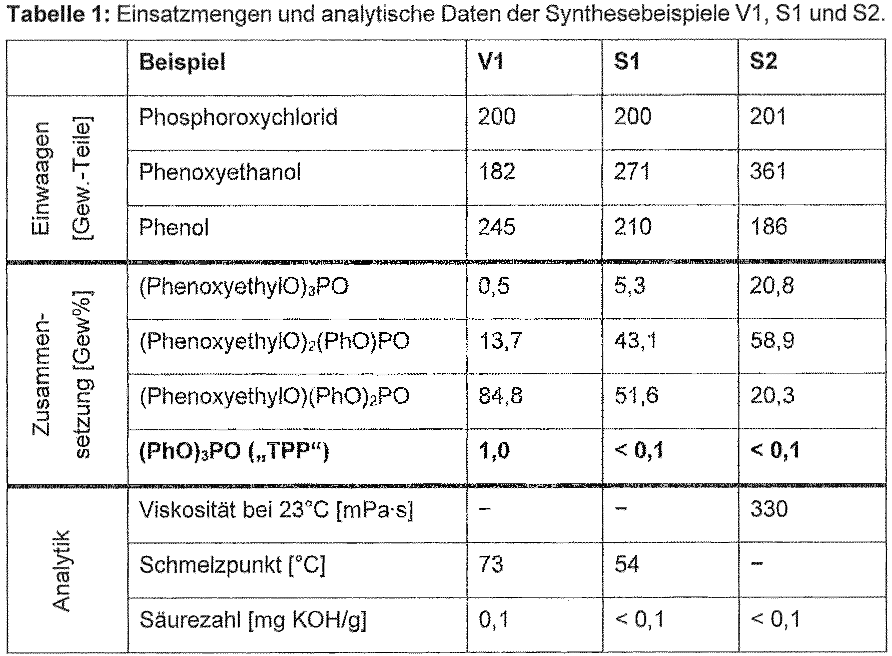

### Herstellung von Weich-PVC

Die für die Ausprüfung eingesetzten Weich-PVC-Formmassen wurden auf einem Laborwalzwerk hergestellt. Nach dem Aufgeben der Mischung aller Rezepturbestandteile (siehe Tabelle 2) beließ man diese auf der Walze bis eine Fellbildung erfolgte. Ab dem Zeitpunkt der Fellbildung wurden die Compounds noch 10 Minuten auf dem Walzwerk compoundiert und schließlich als Walzfell abgenommen. Die Walztemperatur betrug 165°C.

Die Prüfkörper zur Bestimmung des LOI wurden aus den Walzfellen mit einer Presse hergestellt. Die Presstemperatur betrug 170°C, die Pressdauer 4 Minuten zum Vorwärmen bei Niederdruck (< 10 bar) und 2 Minuten bei Hochdruck (> 100 bar). Aus den 4 mm dicken Pressplatten wurden Prüfkörper mit den Abmessungen 90 x 13 x 4 mm gesägt.

Die Prüfkörper zur Bestimmung der Härte der Compounds (50 x 40 x 6 mm) werden wegen der großen Dicke von 6 mm bei gleicher Temperatur länger gepresst. Die Pressdauer betrug 7 Minuten zum Vorwärmen bei Niederdruck und 3 Minuten zum Formpressen bei Hochdruck.

**Tabelle 2: Rezepturbestandteile zur Herstellung von Weich-PVC.**

| **Komponente** | **Funktion** | **Beschreibung** | **Menge** (Gewichtsteile) |
|---|---|---|---|
| A | PVC | Vinnol S4170 | 100 |
| B | Co-Stabilisator | Drapex 39 | 2,5 |
| C | PVC-Stabilisator | Bärostab UBZ 780 RF | 2,5 |
| D | Flamm-schutzmittel | Wie in Tabelle 3 dargestellt | 55 |

Die Herstellung von Weich-PVC gelang mit allen erfindungsgemäßen Phosphorsäureester-Zubereitungen. Alle Proben ließen sich gut verarbeiten.

### Bestimmung der Flammwidrigkeit, der Weichmacherwirkung und der Flüchtigkeit

Für die Beurteilung der Flammwidrigkeit wurde der Sauerstoffindex (Limiting Oxygen Index = LOI) herangezogen. Der LOI ist ein Maß für das Brandverhalten von Kunststoffen und anderen Werkstoffen. Der LOI ist die minimale Sauerstoffkonzentration eines Sickstoff/Sauerstoff Gemisches, unter der die Verbrennung eines Prüfkörpers unter normierten Bedingungen gerade noch stattfinden kann. Die Prüfung wurde gemäß ISO 4589-2 durchgeführt.

Die Weichmacherwirkung der Phosphorsäureester wurde mit einer Shore A-Härte-Messung der Phosphorsäureester-enthaltenden Weich-PVC-Compounds bestimmt. Das Messprinzip beruht auf der Eindringtiefe eines Metallprüfstiftes in die Materialprobe für 15 s mit einer Kraft von 12,5 N. Bestimmt wurde die Shore A-Härte bei Prüfkörpern mit den Abmessungen von 50 x 40 x 6 mm. Die Shore-Härte-Messung wurde in Anlehnung an die DIN ISO 7619-1 ausgeführt. Als Indikator für eine weichmachende Wirkung ist eine Shore A-Härte von weniger als 95 anzusehen.

Die Flüchtigkeit des Weichmachers erfolgte mittels thermogravimetrischer Analyse (TGA) an einem Mettler Toledo-Gerät des Typs TGA/DSC 3+. Hierbei wurde die Masseänderung durch Verdampfen einer Probe in Abhängigkeit von der Temperatur und der Zeit bestimmt. Die einzelnen Proben (< 20 mg) wurden in einem offenen Porzellan-Tiegel eingewogen und mit einer konstanten Heizrate von 10 K/min unter Stickstoff von Raumtemperatur bis 500°C aufgeheizt. Die Masseverluste der einzelnen Produkte wurde bei 245°C ermittelt

Die Ergebnisse der Messungen sind in Tabelle 3 zusammengefasst.

**Tabelle 3: Bestimmung der Flammwidrigkeit der hergestellten PVC-Muster und der Flüchtigkeit der dafür eingesetzten Flammschutzmittel.**

| **Beispiel** | **Flammschutzmittel (Komponente D)** | **Shore A-Härte < 95** | **LOI** | **Gewichtsverlust bei 245°C (TGA)** |
|---|---|---|---|---|
| 1 | Disflamoll^{®} DPO | + | 27,4 | 29,9 Gew% |
| 2 | V1 | + | 29,0 | 6,0 Gew% |
| 3 | S1 | + | 29,1 | 5,5 Gew% |
| 4 | S2 | + | 29,0 | 3,6 Gew% |

Die Ergebnisse zeigen überraschend, dass die erfindungsgemäßen Phosphorsäureester-Zubereitungen eine deutlich niedrigere Flüchtigkeit aufweisen als das Vergleichsbeispiel Disflamoll^{®} DPO.

## Patentansprüche

1. Mischungen enthaltend:
a) 0 bis 30 Gew.-% (RO)₃P=O,
b) 10 bis 90 Gew.-% (RO)₂(PhO)P=O,
c) 10 bis 90 Gew.-% (RO)(PhO)₂P=O und
d) 0 bis 0,5 Gew.-% (PhO)₃P=O
jeweils bezogen auf das Gesamtgewicht der Komponenten a) bis d),
worin R dem Rest 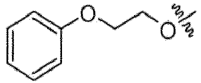
und Ph dem Phenylrest entspricht.

2. Mischungen gemäß Anspruch 1, welche weniger als 0,2 Gew.-% Triphenylphosphat, bevorzugt weniger als 0,1 Gew.-% Triphenylphosphat enthalten.

3. Mischungen gemäß einem oder mehreren der Ansprüche 1 oder 2, welche bei 23°C und 1013 mbar als Feststoffe oder als Flüssigkeit vorliegen, bevorzugt als Flüssigkeit mit einer dynamischen Viskosität von 20 bis 5000 mPa·s, besonders bevorzugt von 50 bis 2000 mPa·s (jeweils bei 23°C).

4. Mischungen gemäß Anspruch 3, welche einen Schmelz- oder Erweichungspunkt von unter 70°C, bevorzugt von unter 55°C besonders bevorzugt von unter 40°C aufweisen.

5. Verfahren zur Herstellung von Mischungen gemäß einem oder mehreren der Ansprüche 1 bis 4 umfassend die Schritte:
(a) Bereitstellen einer Mischung enthaltend Phosphoroxychlorid und Phenoxyethanol,
(b) Umsetzung zumindest eines Teils der Mischung aus a) bei Temperaturen zwischen 0°C bis 50°C unter Abtrennung von Chlorwasserstoff,
(c) Bereitstellen einer Mischung enthaltend Phenol und eine Base sowie optional ein Lösungsmittel,
(d) Vereinigung der aus b) erhaltenen Mischung und der Mischung aus c) und Umsetzung bei Temperaturen zwischen -20°C und 50°C unter Bildung eines Chloridsalzes.

6. Verfahren gemäß Anspruch 5, wobei als Base im Schritt c) ein Trialkylamin, vorzugsweise Triethylamin, eingesetzt wird

7. Verfahren gemäß Anspruch 5 oder 6, wobei zwischen dem Schritt b) und dem Schritt c) eine destillative Abtrennung von Edukten des Schritts a) und/oder von Nebenprodukten erfolgt.

8. Verfahren gemäß einem oder mehreren der Ansprüche 5 bis 7, wobei nach dem Schritt d) eine Abtrennung von Edukten und/oder von Nebenprodukten der Schritte b) und/oder d) erfolgt, vorzugsweise mittels Filtration, Extraktion, Wäsche und/oder Destillation erfolgt.

9. Verwendung von Mischungen gemäß einem oder mehreren der Ansprüche 1 bis 4 als Flammschutzmittel, vorzugsweise als Flammschutzmittel für synthetische Polymere, Werkstoffe pflanzlichen Ursprungs oder Werkstoffe tierischen Ursprungs.

10. Verwendung gemäß Anspruch 9 als Flammschutzmittel für Polyvinylchlorid (PVC).

11. Formmasse enthaltend eine Mischung gemäß einem oder mehreren der Ansprüche 1 bis 4 und Polyvinylchlorid (PVC).

12. Formmasse gemäß Anspruch 11, welche von 5 bis 150 Gewichtsteile, vorzugsweise von 30 bis 70 Gewichtsteile der Phosphorsäureester a) bis d) bezogen auf 100 Gewichtsteile PVC enthält.

13. Verwendung von Formmassen nach Anspruch 9 oder 10 zur Herstellung von Beschichtungen, Folien, Kabel, Rohrleitungen, Schläuchen, Dichtungen, Förderbändern, Dachbahnen, Klebebandfolien, Planen, Markisen oder Zelten.

14. Verwendung von Mischungen gemäß einem oder mehreren der Ansprüche 1 bis 4 als Hydraulikflüssigkeit.

15. Verwendung von Mischungen gemäß einem oder mehreren der Ansprüche 1 bis 4 als Schmierstoffadditiv.

16. Verwendung von Mischungen gemäß einem oder mehreren der Ansprüche 1 bis 4 als Additiv für Lacke, Klebstoffe, Dichtmassen oder Beschichtungen.

17. Verwendung einer Mischung gemäß einem oder mehreren der Ansprüche 1 bis 4 als Wärmeträger.
